# EUROPÄISCHE PATENTANMELDUNG

(11) **EP 1 145 943 A2**
(43) Veröffentlichungstag der Anmeldung: **17.10.2001**
(21) Anmeldenummer: 01105935.9
(22) Anmeldetag: 09.03.2001
(51) Int. Cl.: B62H 5/04

(54) **Fernbedienbares Zündlenkschloss für Motorräder**

(30) Priorität: 15.04.2000 DE 10018727
(71) Anmelder: Bayerische Motoren Werke Aktiengesellschaft, 80809 München (DE)
(72) Erfinder: Kehr, Ralf, 75173 Pforzheim (DE)

(57) **Zusammenfassung**

Die Erfindung betrifft ein Zündlenkschloß für Motorräder, umfassend ein Schloßgehäuse (1), einen Schließzylinder (3), der in dem Schloßgehäuse drehbar gelagert ist, und Schließstifte (5), die in dem Schließzylinder beweglich gelagert und mit einem Schlüssel betätigbar sind, damit der Schließzylinder wahlweise gegenüber dem Schloßgehäuse verdrehbar oder gegen ein Verdrehen blockiert ist. Um eine Fernbedienung des Zündlenkschlosses zu ermöglichen, ist vorgesehen, daß in das Schloßgehäuse (1) eine Hülse (2) verdrehbar eingesetzt ist, in der der Schließzylinder (3) drehbar gelagert und mit den Schließstiften (5) in Sperreingriff bringbar sind, daß in dem Schloßgehäuse (1) ein Sperrbolzen (10) verschiebbar gelagert ist, der mit einer Rastöffnung der Hülse (2) in Eingriff bringbar ist, und daß dem Sperrbolzen ein mit einer Fernbedienung ansteuerbarer Elektromagnet (11) zugeordnet ist.

## Beschreibung

Die Erfindung betrifft ein Zündlenkschloß für Motorräder, umfassend ein Schloßgehäuse, das an dem Fahrzeug befestigbar ist, einen Schließzylinder, der in dem Schloßgehäuse drehbar gelagert und mit einem Lenkungssperrbolzen und mit einem elektrischen Schalter für den Zündstrom gekuppelt ist, und Schließstifte, die in dem Schließzylinder beweglich gelagert und mit einem Schlüssel betätigbar sind, damit der Schließzylinder wahlweise gegenüber dem Schloßgehäuse verdrehbar oder gegen ein Verdrehen blockiert ist.

Die meisten der auf dem Markt befindlichen Motorräder sind mit einem Zündlenkschloß der vorstehend genannten Gattung versehen, das ausschließlich mit einem Schlüssel betätigbar ist. Zu diesem Zweck wird ein Schlüssel in eine Öffnung des Schließzylinders eingeführt, um die Schließstifte mit dem Schloßgehäuse außer Eingriff zu bringen, so daß der Schließzylinder in die Fahrstellung verdrehbar ist. Durch diese Verdrehung des Schließzylinders in die Fahrstellung wird einerseits der Lenkungssperrbolzen ausgerückt und andererseits der elektrische Schalter für den Zündstrom geschlossen, so daß das Motorrad start- und fahrbereit ist. Diese Betätigung des Zündlenkschlosses mit einem entsprechenden Schlüssel wird von manchen Motorradfahrern als unpraktisch empfunden, und es besteht der Wunsch nach einer Fernbedienung.

Der Erfindung liegt die Aufgabe zugrunde, das gattungsgemäße Zündlenkschloß dahingehend weiterzubilden, daß es ohne Verwendung eines Schlüssels mit einer Fernbedienung ansteuerbar ist.

Erfindungsgemäß wird diese Aufgabe dadurch gelöst, daß in das Schloßgehäuse eine Hülse verdrehbar eingesetzt ist, in der der Schließzylinder drehbar gelagert ist und mit der die Schließstifte in Sperreingriff bringbar sind, daß in dem Schloßgehäuse ein Sperrbolzen verschiebbar gelagert ist, der mit einer Rastöffnung der Hülse in Eingriff bringbar ist, und daß dem Sperrbolzen ein mit einer Fernbedienung ansteuerbarer Elektromagnet zugeordnet ist.

Um das mit dem erfindungsgemäßen Zündlenkschloß ausgerüstete Motorrad fahr- und startbereit zu machen, kann der Fahrer mit der Fernbedienung den Elektromagneten ansteuern um den Sperrbolzen mit der Rastöffnung der Hülse außer Eingriff zu bringen. Die Hülse kann sodann von Hand zusammen mit dem Schließzylinder in die Fahrstellung verdreht werden. Falls der Sperrbolzen aus irgendeinem Grund nicht in seine unwirksame Stellung bewegt werden kann, beispielsweise weil der Elektromagnet schadhaft ist oder die Spannung der Batterie zu gering ist, dann kann der Schließzylinder auf herkömmliche Weise mit dem Zündschlüssel entriegelt und in die Fahrstellung verdreht werden.

Der Sperrbolzen ist vorzugsweise mit einer Feder zum Eingriff mit der Rastöffnung der Hülse vorgespannt. In dem Elektromagnet muß daher nur zum Ausrücken des Sperrbolzens ein Strom fließen. Der Stromverbrauch ist somit sehr gering.

Bei einer vorteilhaften Weiterbildung der Erfindung ist vorgesehen, daß am Umfang der Hülse ein Exzenter angeordnet ist, der den Sperrbolzen beim Verdrehen der Hülse in die Absperrstellung nach außen drückt. Der Exzenter ermöglicht es dem Fahrer den Motor abzustellen und das Zündlenkschloß abzusperren, ohne den Elektromagneten mit der Fernbedienung anzusteuern. Zur Sicherheit könnte eine elektronische Aktivierung des Elektromagneten für einen kurzen Zeitraum von z.B. 5 sec eine versehentliche Deaktivierung des Motorrades verhindern.

Ein Ausführungsbeispiel der Erfindung ist in der Zeichnung dargestellt und wird nachfolgend näher erläutert. Es zeigt:
Fig. 1 einen schematischen Längsschnitt durch ein fernbedienbares Zündlenkschloß, und
Fig. 2 einen Querschnitt durch einen Bereich des Zündlenkschlosses nach Fig. 1.

Das in der Zeichnung dargestellte fernbedienbare Zündlenkschloß für Motorräder umfaßt ein herkömmliches Schloßgehäuse 1, das an dem Fahrzeug starr befestigbar ist. In eine abgesetzte Bohrung des Schloßgehäuses 1 ist eine Hülse 2 drehbar eingesetzt. In der Hülse 2 ist ein herkömmlicher Schließzylinder 3 drehbar gelagert. Der Schließzylinder 3 ist über einen unteren Ansatz 4 mit einer (nicht gezeigten) Welle drehfest verbunden, die zum Ein- und Ausrücken eines Lenkungs-Sperrbolzens und zum Öffnen und Schließen eines elektrischen Schalters für den Zündstrom dient. In dem Schließzylinder 3 sind Schließstifte 5 radial verschiebbar gelagert, die mit entsprechenden Sperrausnehmungen 6 der Hülse 2 in Eingriff bringbar sind. Wenn ein (nicht gezeigter) Zündschlüssel in eine axiale Öffnung 7 des Schließzylinders 3 eingesetzt und verdreht wird, dann werden die Schließstifte 5 aus den Sperrausnehmungen 6 der Hülse 2 herausgezogen. Der Schließzylinder 3 kann sodann zum Ausrücken des Lenkungs-Sperrbolzens und zum Schließen des elektrischen Schalters für den Zündstrom verdreht werden, so daß das Motorrad fahr- und startbereit ist. Die Betätigung des Zündlenkschlosses mit einem Zündschlüssel ist bekannt und bedarf daher keiner weiteren Erläuterung.

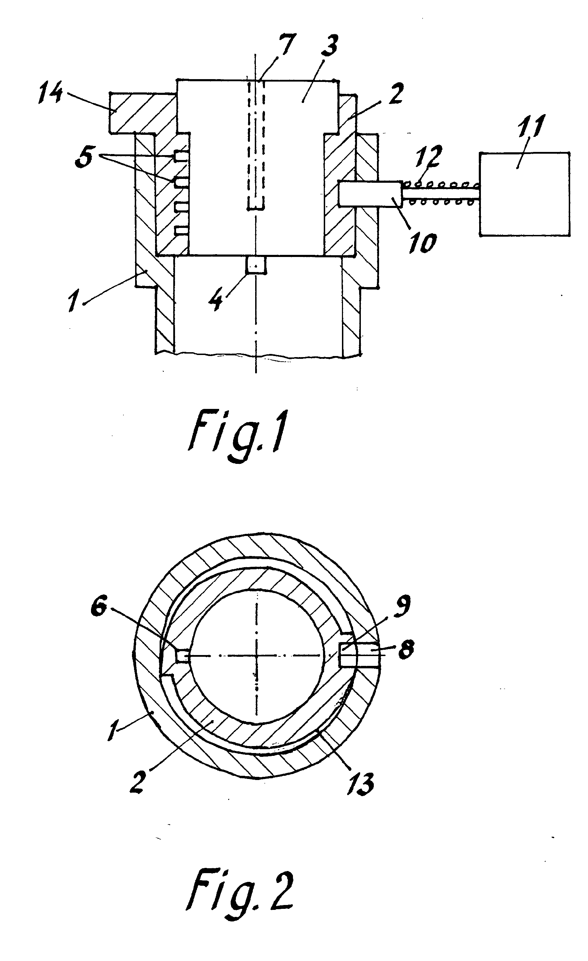

Im Schloßgehäuse 1 ist eine radiale Bohrung 8 angeordnet, die mit einer Rastöffnung 9 der Hülse 2 zur Deckung bringbar ist. In der Bohrung 8 des Schloßgehäuses 1 ist ein Sperrbolzen 10 verschiebbar gelagert. Der Sperrbolzen 10 ist mit einem Elektromagneten 11 verbunden. Der Elektromagnet 11 ist mit einer (nicht gezeigten) Fernbedienung ansteuerbar. Eine Schraubendruckfeder 12 stützt sich an dem Elektromagneten 11 und an einer Ringschulter des Sperrbolzens 10 ab, so daß dieser zum Eingriff in die Rastöffnung 9 vorgespannt ist. Wie aus der Darstellung nach Fig. 2 hervorgeht, sind am Umfang der Hülse 2 auf der Höhe der Rastöffnung 9 zwei Exzenter 13 angeordnet, auf deren Zweck später noch eingegangen wird.

In Fig. 1 der Zeichnung ist das Zündlenkschloß im gesperrten Zustand gezeigt, in dem der Lenkungs-Sperrbolzen eingerückt und der elektrische Schalter für den Zündstrom geöffnet ist. Wenn der Fahrer das Motorrad fahr- und startbereit machen will, dann kann er mit einer an sich bekannten Fernbedienung, die beispielsweise in den Zündschlüssel eingebaut ist, einen (nicht gezeigten) Steuermodul ansteuern, um den Elektromagneten 11 für einen Zeitraum von ca. 20 Sekunden mit der (nicht gezeigten) Batterie des Motorrades zu verbinden. Der auf diese Weise aktivierte Elektromagnet 11 zieht demzufolge den Sperrbolzen 10 gegen die Kraft der Schraubendruckfeder 12 so weit zurück, daß er mit der Rastöffnung 9 der Hülse 2 außer Eingriff gelangt. Die formschlüssige Verbindung der Hülse 2 mit dem Schloßgehäuse 1 ist damit aufgehoben, so daß der Fahrer die Hülse 2 an drei um 120° versetzten Vorsprüngen 14 erfassen und verdrehen kann. Da der Schließzylinder 3 über die Schließstifte 5 mit der Hülse 2 drehfest verbunden ist, wird er zwangsweise zusammen mit dieser verdreht. Der Lenkungs-Sperrbolzen wird daher ausgerückt, und der elektrische Schalter für den Zündstrom wird geschlossen, so daß das Motorrad fahr- und startbereit ist. Sobald der Elektromagnet 11 stromlos wird, drückt die Schraubendruckfeder 12 den Sperrbolzen 10 gegen den Exzenter 13 der Hülse 2. Da der Sperrbolzen 10 unter der Vorspannkraft der Schraubendruckfeder 12 an dem Exzenter 13 anliegt, wird eine unbeabsichtigte Verdrehung der Hülse 2 in die Sperrstellung verhindert, in der der Sperrbolzen 10 in die Rastöffnung 9 einrasten könnte. Da der Elektromagnet 11 nur zum Entriegeln des Zündlenkschlosses dient, wird eine hohe Betriebssicherheit erreicht, weil der Betriebszustand des Elektromagneten 11 bedeutungslos ist, sobald sich die Hülse 2 in der Fahrstellung befindet.

Zum Absperren des Zündlenkschlosses kann der Fahrer die Hülse 2 von Hand verdrehen, so daß der an dem Exzenter 13 anliegende Sperrbolzen 10 nach außen gedrückt wird. Sobald die Hülse 2 so weit verdreht wurde, daß die Rastöffnung 9 mit der Bohrung 8 des Schloßgehäuses 1 fluchtet, rastet der Sperrbolzen 10 unter der Vorspannkraft der Schraubendruckfeder 12 in die Rastöffnung 9 ein. Die Hülse 2 ist daher gegen eine Verdrehung gegenüber dem Schloßgehäuse 1 blockiert. Da der Schließzylinder 3 seinerseits über die Schließstifte 5 mit der Hülse 2 drehfest verbunden ist, wurde er gemeinsam mit der Hülse 2 verdreht, so daß der Lenkungs-Sperrbolzen eingerückt und der elektrische Schalter für den Zündstrom geöffnet wurde.

Falls es einmal nicht möglich sein sollte, den Elektromagneten 11 mit der Fernbedienung zu aktivieren, beispielsweise weil die Batteriespannung zu gering ist, dann kann der Sperrbolzen 10 nicht aus der Rastöffnung 9 der Hülse 2 zurückgezogen werden. In diesem Fall kann das Zündlenkschloß aber auf herkömmliche Weise mit dem Zündschlüssel geöffnet werden. Wie dies eingangs bereits erwähnt wurde, können die Schließstifte 5 mit dem Zündschlüssel mit den Sperrausnehmungen 6 der Hülse 2 außer Eingriff gebracht werden, so daß der Schließzylinder 3 frei verdrehbar ist.

Die Fernbedienung zur Aktivierung des Elektromagneten 11 kann zugleich zur Betätigung einer Zentralverriegelung dienen. Eine solche Zentralverriegelung ist bei solchen Motorrädern überaus vorteilhaft, die mehrere verriegelbare Klappen, wie z. B. eine Kofferklappe, eine Tankklappe, eine Radiofachklappe oder dergleichen aufweisen.

### Bezugszeichenliste:

- 1: Schloßgehäuse
- 2: Hülse
- 3: Schließzylinder
- 4: Ansatz
- 5: Schließstifte
- 6: Sperrausnehmung
- 7: Öffnung
- 8: Bohrung
- 9: Rastöffnung
- 10: Sperrbolzen
- 11: Elektromagnet
- 12: Schraubendruckfeder
- 13: Exzenter
- 14: Vorsprünge

## Patentansprüche

1. Zündlenkschloß für Motorräder, umfassend ein Schloßgehäuse, das an dem Fahrzeug befestigbar ist, einen Schließzylinder, der in dem Schloßgehäuse drehbar gelagert und mit einem Lenkungssperrbolzen und mit einem elektrischen Schalter für den Zündstrom gekuppelt ist, und Schließstifte, die in dem Schließzylinder beweglich gelagert und mit einem Schlüssel betätigbar sind, damit der Schließzylinder wahlweise gegenüber dem Schloßgehäuse verdrehbar oder gegen ein Verdrehen blockiert ist, **dadurch gekennzeichnet, daß** in das Schloßgehäuse (1) eine Hülse (2) verdrehbar eingesetzt ist, in der der Schließzylinder (3) drehbar gelagert ist und mit der die Schließstifte (5) in Sperreingriff bringbar sind, daß in dem Schloßgehäuse (1) ein Sperrbolzen (10) verschiebbar gelagert ist, der mit einer Rastöffnung (9) der Hülse (2) in Eingriff bringbar ist, und daß dem Sperrbolzen ein mit einer Fernbedienung ansteuerbarer Elektromagnet (11) zugeordnet ist.

2. Zündlenkschloß nach Anspruch 1 **dadurch gekennzeichnet, daß** der Sperrbolzen (10) mit einer Feder (12) zum Eingriff mit der Rastöffnung (9) der Hülse (2) vorgespannt ist.

3. Zündlenkschloß nach Anspruch 1 oder 2, **dadurch gekennzeichnet, daß** am Umfang der Hülse (2) ein Exzenter (13) angeordnet ist, der den Sperrbolzen (10) beim Verdrehen der Hülse in die Absperrstellung nach außen drückt.

4. Zündlenkschloß nach einem der Ansprüche 1 bis 3, **dadurch gekennzeichnet, daß** mit der Fernbedienung eine Zentralverriegelung ansteuerbar ist.
